# FASCICULE DE BREVET EUROPEEN

(11) **EP 2 895 262 B1**
(45) Date de publication et mention de la délivrance du brevet: **12.10.2016**
(21) Numéro de dépôt: 13762166.0
(22) Date de dépôt: 12.08.2013
(51) Int. Cl.: B01J 19/32

(54) **GARNISSAGE STRUCTURÉ HAUTE PERFORMANCE POUR COLONNE DE MISE EN CONTACT DE FLUIDES**
STRUKTURIERTE HOCHLEISTUNGSVERKAPSELUNG FÜR EINE FLÜSSIGKEITSKONTAKTSÄULE
HIGH-PERFORMANCE STRUCTURED PACKING FOR A FLUID CONTACTING COLUMN

(30) Priorité: 11.09.2012 FR 1202422
(43) Date de publication de la demande: 22.07.2015
(73) Titulaire: IFP Énergies nouvelles, 92852 Rueil-Malmaison Cedex (FR)
(72) Inventeur: RAYNAL, Ludovic, F-69600 Oullins (FR); GONNOT, Raphaël, 69320 Feyzin (FR); MEJEAN, Mickael, F-69520 Grigny (FR); ALIX, Pascal, F-38150 Roussillon (FR)
(86) Numéro de dépôt international: PCT/FR2013/051926
(87) Numéro de publication internationale: WO 2014/041269

(56) Documents cités:
- FR-A1- 2 871 074
- US-A1- 2010 213 625
- US-B1- 6 409 378

## Description

La présente invention concerne le domaine des équipements de mise en contacts de fluides.

Les colonnes de mise en contact ont pour but de mettre en contact des fluides afin de réaliser des transferts de matière ou de chaleur entre les fluides. Ce type d'équipement de mise en contact de fluide est largement utilisé pour réaliser des opérations de distillation, de rectification, d'absorption, d'échange de chaleur, d'extraction, de réaction chimique, etc.

Les colonnes de mise en contact sont généralement constituées d'une enceinte cylindrique munie d'éléments de mise en contact interne favorisant l'échange entre les fluides. Dans la colonne, les fluides peuvent circuler à co-courant ou à contre-courant. En général, la colonne permet de mettre en contact intime une phase gazeuse ascendante avec une phase liquide descendante. Les éléments de mise en contact qui augmentent la surface de contact entre les fluides, peuvent être des plateaux, des garnissages structurés, c'est-à-dire la juxtaposition de plusieurs éléments unitaires agencés de manière ordonnée, par exemple des feuillets ondulés, ou des garnissages en vrac, c'est-à-dire des empilements anarchiques d'éléments unitaires, par exemple des anneaux, des spirales.

Les garnissages structurés peuvent être constitués de feuilles pliées et arrangées de manière organisée sous forme de grands blocs comme décrit par exemple dans les documents US 3,679,537 et US 4,296,050. Les garnissages en vrac de nouvelle génération sont généralement constitués d'éléments métalliques pourvus de perforations et des portions d'arc de formes sophistiquées.

Les garnissages structurés ont l'avantage d'offrir une grande aire géométrique pour un diamètre représentatif donné, en générale le diamètre hydraulique des canaux, par contre leur aire efficace est inférieure ou proche de leur aire géométrique. A contrario, les garnissages en vrac offrent des valeurs d'aire géométrique assez faibles au regard de leur taille caractéristique, par contre, ils peuvent développer des aires efficaces au transfert supérieures à leur aires géométriques.

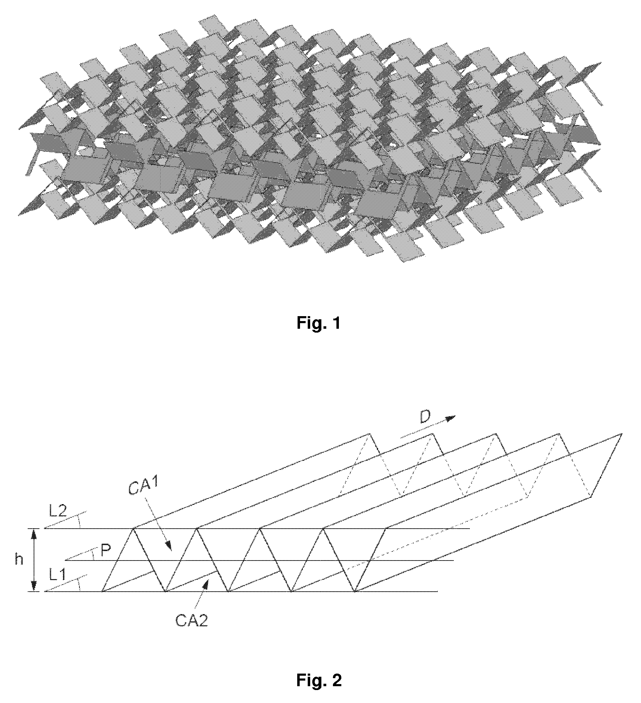

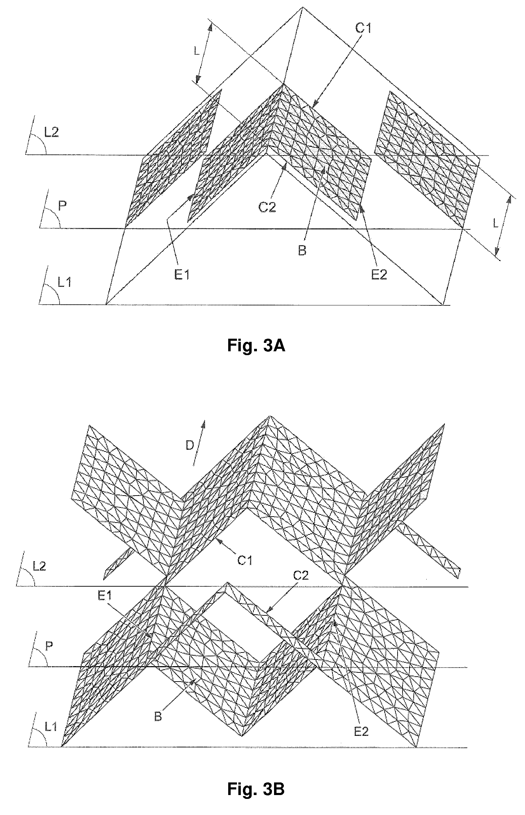

On connaît de la demande de brevet US 2010/0213625 un garnissage combinant les avantages des garnissages structurés et les avantages des garnissages en vrac. Un tel garnissage structuré est construit de telle sorte que l'on retrouve les caractéristiques de garnissages en vrac induisant en particulier des détachements de liquide de la surface du garnissage et permettant de développer une aire efficace sensiblement supérieure à son aire géométrique. Ce garnissage (figure 1) est composé d'un empilement de plaques (figures 2, 3A et 3B) comportant des ondulations, chaque plaque étant inscrite entre deux plans parallèles distants d'une valeur comprise entre 5 et 50 mm. Les ondulations forment une succession d'arrêtes positives (sommet d'un canal, CA2) et négatives (creux d'un canal, CA1) qui comportent des ailettes inscrites entre lesdits deux plans parallèles. Les ailettes sont formées par découpe et déformation d'une bande B. Cette bande B est découpée selon des entailles C1 et C2. Les entailles C1 et C2 forment un angle de 90° par rapport à la direction principale des canaux. La bande B reste solidaire de la plaque au niveau de ses extrémités E1 et E2. La bande B est déformée de manière à épouser une forme triangulaire sensiblement symétrique à sa forme initiale, par rapport au plan méridien P. La largeur L d'une bande B est environ égale à la distance séparant deux bandes contiguës le long d'un canal (entre 1 et 15 mm). La direction (D) des arrêtes d'une plaque forme un angle non nul par rapport à la direction (D') des arrêtes d'une plaque adjacente. Les positions de deux plaques consécutives sont telles que les directions principales des arrêtes de chacune des deux plaques varient de 60 à 90°.

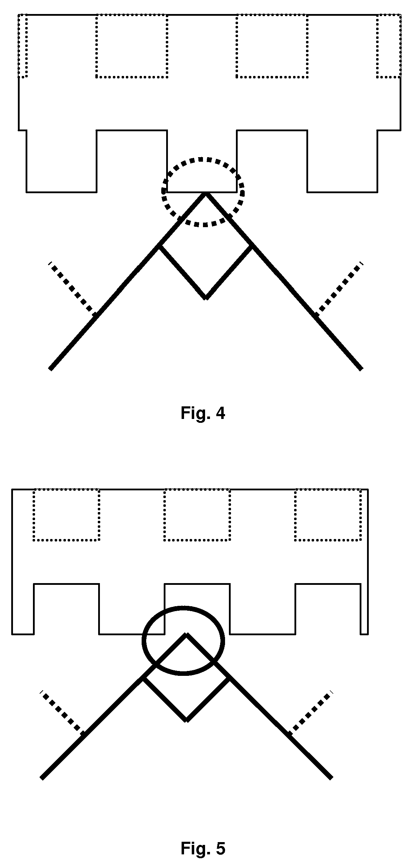

La figure 4 et la figure 5 montrent respectivement deux cas possibles de contact entre deux plaques consécutives. On qualifie de bon un contact entre deux plaques, lorsque ce contact se produit entre une arrête positive d'une plaque et une arrête négative d'un plaque adjacente. Sur la figure 4, il y a correspondance entre deux zones sans ouvertures et il y a un bon contact entre les plaques de sorte qu'elles ne risquent pas de s'interpénétrer. Sur la figure 5, il y a correspondance entre d'une part une zone sans ouverture (plaque inférieure) et d'autre part une zone avec ouverture (plaque supérieure); il n'y a donc pas de bon contact entre les plaques de sorte qu'elles peuvent s'interpénétrer, de sorte qu'un montage satisfaisant n'est pas possible avec une mise en oeuvre compatible avec une production industrielle.

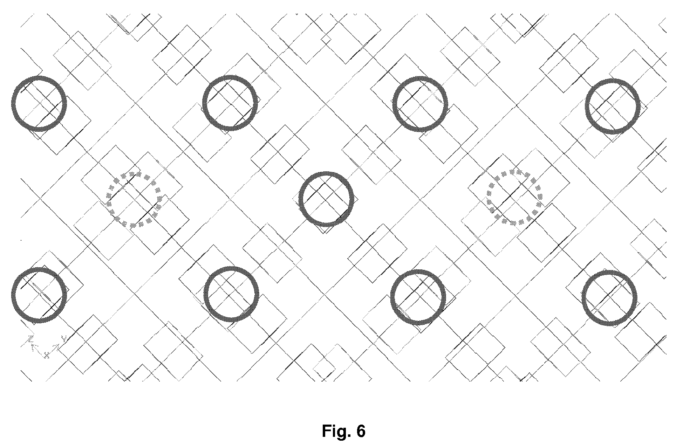

La probabilité de mauvais contacts est illustrée par la figure 6. Cette figure correspondant à une vue 2D de deux plaques superposées. On constate que pour quelques zones de bons contacts (cercles en traits pointillés), il y a un grand nombre de mauvais contacts (cercles en traits continus). Lors du montage de blocs de garnissages industriels, les nombreuses plaques constitutives d'un bloc sont maintenues serrées les unes contre les autres et le fait de ne pas avoir suffisamment de point de contact résulte en un non respect de l'épaisseur totale du bloc, il y a des zones d'enchevêtrement des plaques néfastes à l'écoulement, et d'autres zones de trop grand écartement laissant la possibilité de contournement (bypass) de gaz ou de liquide.

Afin de conserver les performances du garnissage, il est indispensable d'assurer un bon montage des plaques entre elles, c'est-à-dire un montage sans enchevêtrement.

Ainsi l'objet de l'invention concerne un garnissage combinant les avantages des garnissages structurés et les avantages des garnissages en vrac, tel que le garnissage décrit dans le document US 2010/0213625, dans lequel le nombre de bons contacts est maximisé par une différence de longueur d'ailettes entre un canal et son canal voisin.

De façon générale, l'invention concerne un garnissage structuré d'une colonne d'échange de fluide définissant une surface d'échange pour au moins une phase liquide destinée à être mise en contact intime avec au moins une phase gazeuse, ledit garnissage étant composé d'un empilement de plaques rectangulaires comportant des ondulations, chaque plaque étant inscrite entre deux plans parallèles (L1 ; L2), lesdites ondulations formant une succession de canaux qui comportent des ailettes (A) inscrites entre lesdits deux plans parallèles, chacune desdites ailettes étant constituée par au moins une bande (B) découpée dans une desdites plaques, la largeur (L) de la bande étant comprise entre 1 et 15 mm, la bande restant solidaire de la plaque par au moins un coté (E1 ; E2) et la bande étant déformée de manière à créer un orifice formant une discontinuité sur la surface de la plaque, et dans lequel la direction (D) des canaux d'une plaque forme un angle non nul par rapport à la direction (D') des canaux d'une plaque adjacente, et dans lequel les ailettes d'un canal ont des longueurs différentes des ailettes d'un canal voisin.

Selon l'invention, les ailettes d'un canal peuvent avoir une longueur comprise entre 1 et 15 mm, et les ailettes d'un canal voisin une longueur plus grande comprise entre 2 et 50 mm.

Selon un mode de réalisation, les ailettes d'un même canal ont une même longueur.

L'invention concerne également une colonne de mise en contact de fluide comportant plusieurs blocs comprenant des garnissages structurés selon l'invention, dans laquelle ladite direction des canaux des garnissages est orientée selon un angle compris entre 10° et 75° par rapport à l'axe de la colonne et dans laquelle les plans médians du garnissage structuré d'un desdits blocs forment un angle compris entre 20° et 90° par rapport aux plans médians des blocs adjacents.

L'invention concerne également une application d'une colonne de mise en contact selon l'invention au séchage de gaz, à la désacidification d'un gaz naturel, à la décarbonatation des fumées, au traitement des gaz de queue d'un procédé Claus ou à la distillation.

D'autres caractéristiques et avantages de l'invention seront mieux compris et apparaîtront clairement à la lecture de la description faite ci-après en se référant aux dessins parmi lesquels :
- La figure 1 représente un garnissage composé d'un empilement de plaques ondulées comportant des ailettes.
- La figure 2 schématise une forme de plaque ondulée représentée sans les ailettes.
- Les figures 3A et 3B montrent une bande découpée dans un canal d'une plaque ondulée.
- La figure 4 montre un cas de bon contact entre deux plaques consécutives.
- La figure 5 montre un cas de mauvais contact entre deux plaques consécutives.
- La figure 6 illustre la probabilité de mauvais contacts et bons contacts entre deux plaques consécutives.
- La figure 7 illustre une vue 3D d'une plaque de garnissage selon l'invention.
- La figure 8 représente une vue de dessus d'une plaque selon l'invention, avec ouvertures longues sur les crêtes (arrêtes positives apparaissant en trait épais) et ouvertures courtes dans les creux (arrêtes négatives apparaissant en trait fin).
- La figure 9 représente une vue de dessus de deux plaques de garnissage selon l'invention, l'une au dessus de l'autre avec mises en évidence des bons contacts (zones entourées de cercles).

Les figures 2, 3A et 3B représentent une feuille ou plaque ondulée rectangulaire qui constitue la base du garnissage structuré selon l'invention. Les ondulations sont encadrées entre deux plans parallèles L1 et L2 relativement proches. La distance h séparant L1 de L2 peut être comprise entre 5 mm et 50 mm, de préférence supérieure à 10 mm, et de préférence comprise entre 10 mm et 30 mm. Le plan méridien P partage l'espace entre L1 et L2 en deux parties égales. Sur les figures 2, 3A et 3B, les ondulations sont en forme de triangle et sont réparties de part et d'autre du plan méridien P : une partie des ondulations étant située d'un côté du plan P, l'autre partie des ondulations étant située de l'autre côté du plan P. Les ondulations forment une succession de canaux qui s'étendent dans la direction marquée par la flèche D. Sur la figure 2, le canal CA1 est situé en dessous du plan P. Le canal CA2 contigu au canal CA1 est situé au dessus du plan P. De préférence, on choisit des ondulations qui génèrent des canaux qui touchent les plans L1 et L2, sans sortir de l'espace délimité par ces deux plans. Ainsi, les feuilles ondulées occupent une surface maximum dans la tranche plane définie par les plans L1 et L2. Un canal comporte soit une arrête positive (CA2) soit une arrête négative (CA1).

On peut employer différentes formes d'ondulation des plaques pour réaliser un garnissage structuré selon l'invention. Par exemple, on peut utiliser des plaques présentant des ondulations de forme sinusoïdale. On peut mettre en oeuvre des ondulations qui ne sont pas symétriques, par exemple un enchaînement de demi-cercles et de triangles. On peut également utiliser des plaques comportant des ondulations irrégulières et aléatoires.

Les ondulations qui forment une succession d'arrêtes positives (sommet d'un canal) et négatives (creux d'un canal) comportent des ailettes inscrites entre les deux plans parallèles. Chacune des ailettes est constituée par au moins une bande découpée dans une des plaques, la largeur de la bande étant comprise entre 1 et 15 mm, la bande restant solidaire de la plaque par au moins un coté et la bande étant déformée de manière à créer un orifice formant une discontinuité sur la surface de la plaque. La direction (D) des arrêtes d'une plaque forme un angle non nul par rapport à la direction (D') des arrêtes d'une plaque adjacente,

Les positions de deux plaques consécutives sont telles que les directions principales des arrêtes de chacune des deux plaques varient de 60 à 90°.

Afin d'améliorer les performances de ce type de garnissage, il est indispensable d'assurer un bon montage des plaques entre elles, c'est-à-dire un montage sans enchevêtrement. Pour ce faire, on modifie les plaques de façon à maximiser le nombre de bons contacts entre deux plaques, c'est-à-dire des contacts se produisant entre une arrête positive d'une plaque et une arrête négative d'un plaque adjacente.

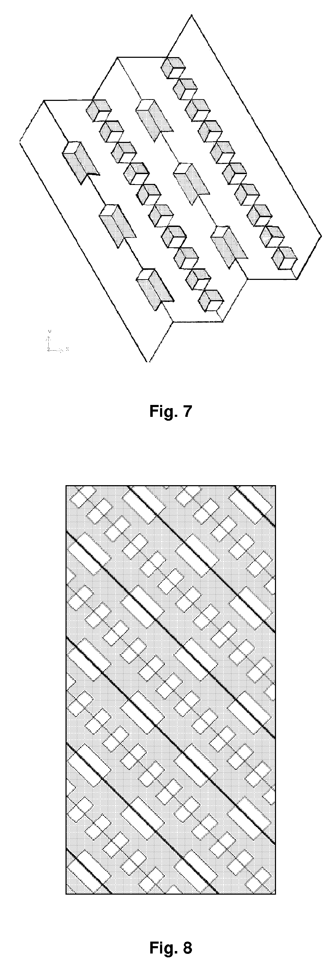

Selon l'invention, les ailettes d'un canal ont des longueurs différentes des ailettes d'un canal voisin, comme l'illustrent la figure 7 et la figure 8.

Par exemple, on peut utiliser de grandes ouvertures sur les arrêtes positives, et de petites ouvertures sur les arrêtes négatives.

Les petites ouvertures ont une longueur comprise entre 1 et 15 mm, et de préférence entre 2 et 10 mm.

Les grandes ouvertures ont une longueur comprise entre 2 et 50 mm, et de préférence entre 5 et 25 mm.

Les caractéristiques du canal sont telles que l'on développe entre 50 et 800 m2/m3 et de préférence entre 150 et 500 m2/m3 d'aire géométrique.

La figure 7 représente une vue 3D d'une plaque de garnissage selon l'invention.

La figure 8 représente une vue de dessus d'une plaque selon l'invention, avec ouvertures longues sur les crêtes (arrêtes positives) et ouvertures courtes dans les creux (arrêtes négatives).

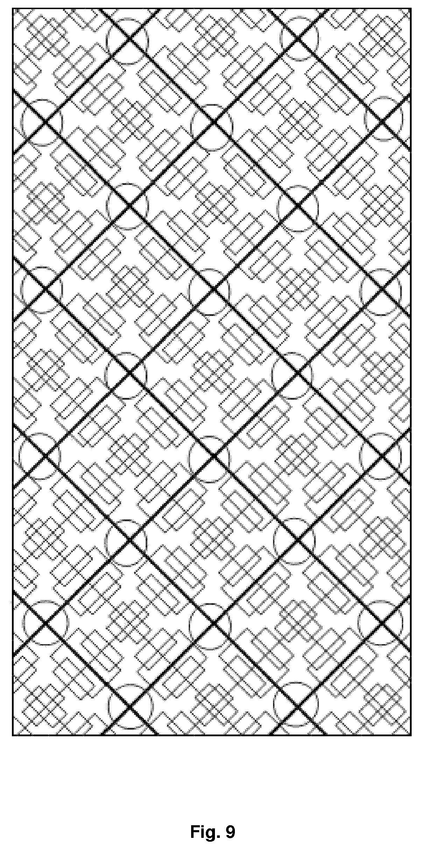

La figure 9 représente une vue de dessus de deux plaques de garnissage selon l'invention, l'une au dessus de l'autre (seules les ouvertures inférieures de la plaque supérieure et seules les ouvertures supérieures de la plaque inférieure sont représentées). Les cercles mettent en évidence les points de bon contact (contact entre une arrête positive d'une plaque et une arrête négative d'un plaque adjacente).

Les feuilles ondulées pourvues d'ailettes sont empilées de manière à former un garnissage structuré. De préférence, la direction des canaux d'une feuille ondulée est décalée par rapport à la direction des canaux des feuilles adjacentes, par exemple d'un angle compris entre 20° et 90°, de préférence d'un angle ayant une valeur sensiblement proche de 90°.

Pour une plaque ondulée de hauteur H et de longueur L, la hauteur H fixe la hauteur des blocs de garnissage, elle est généralement proche de 20 cm mais peut être comprise entre 2 cm et 1 m, de préférence entre 10 cm et 30 cm. La longueur L est variable et est fonction du diamètre de la colonne dans laquelle le garnissage est installé, ce diamètre variant de typiquement 5 cm jusqu'à 15 m. Pour des colonnes industrielles classiques, c'est à dire ayant un diamètre supérieure à 1 mètre, les longueurs sont de préférence comprise entre 0.5 et 3 m et de préférence entre 1 et 2m.

Le garnissage selon l'invention peut être mis en oeuvre pour le séchage de gaz, la désacidification d'un gaz naturel, la décarbonatation des fumées et le traitement des gaz de queue d'un procédé Claus.

Dans ces applications, le gaz à traiter est mis en contact avec une solution absorbante liquide dans une colonne de mise en contact. Cette colonne comporte plusieurs blocs comprenant des garnissages structurés selon l'invention, dans laquelle la direction des canaux des garnissages est orientée selon un angle compris entre 10° et 75° par rapport à l'axe de la colonne et dans laquelle les plans médians du garnissage structuré d'un desdits blocs forment un angle compris entre 20° et 90° par rapport aux plans médians des blocs adjacents.

Le garnissage selon l'invention peut être mis en oeuvre pour la distillation, notamment pour la distillation de coupes hydrocarbures. Dans cette application, le garnissage selon l'invention est situé dans une colonne munie d'au moins une alimentation en charge et de deux soutirages, une phase lourde et une phase légère.

## Revendications

1. Garnissage structuré d'une colonne d'échange de fluide définissant une surface d'échange pour au moins une phase liquide destinée à être mise en contact intime avec au moins une phase gazeuse, ledit garnissage étant composé d'un empilement de plaques rectangulaires comportant des ondulations, chaque plaque étant inscrite entre deux plans parallèles (L1 ; L2), lesdites ondulations formant une succession de canaux qui comportent des ailettes (A) inscrites entre lesdits deux plans parallèles, chacune desdites ailettes étant constituée par au moins une bande (B) découpée dans une desdites plaques, la largeur de la bande étant comprise entre 1 et 15 mm, la bande restant solidaire de la plaque par au moins un coté (E1 ; E2) et la bande étant déformée de manière à créer un orifice formant une discontinuité sur la surface de la plaque, et dans lequel la direction (D) des canaux d'une plaque forme un angle non nul par rapport à la direction (D') des canaux d'une plaque adjacente, et dans lequel les ailettes d'un canal ont des longueurs différentes des ailettes d'un canal voisin.

2. Garnissage selon la revendication 1, dans lequel les ailettes d'un canal ont une longueur comprise entre 1 et 15 mm, et les ailettes d'un canal voisin une longueur plus grande comprise entre 2 et 50 mm.

3. Garnissage selon l'une des revendications précédentes, dans lequel les ailettes d'un même canal ont une même longueur.

4. Colonne de mise en contact de fluide comportant plusieurs blocs comprenant des garnissages structurés selon l'une des revendications précédentes, dans laquelle ladite direction des canaux des garnissages est orientée selon un angle compris entre 10° et 75° par rapport à l'axe de la colonne et dans laquelle les plans médians du garnissage structuré d'un desdits blocs forment un angle compris entre 20° et 90° par rapport aux plans médians des blocs adjacents.

5. Application d'une colonne de mise en contact selon la revendication 4 au séchage de gaz, à la désacidification d'un gaz naturel, à la décarbonatation des fumées, au traitement des gaz de queue d'un procédé Claus ou à la distillation.

## Patentansprüche

1. Strukturierte Packung für eine Kolonne zum Flüssigkeitsaustausch, die eine Austauschoberfläche für mindestens eine flüssige Phase definiert, die dazu bestimmt ist, mit mindestens einer gasförmigen Phase in engen Kontakt gebracht zu werden, wobei die Packung aus einem Stapel recheckiger Platten besteht, die Wellen umfassen, wobei jede Platte zwischen zwei parallelen Ebenen (L1; L2) eingesetzt ist, wobei die Wellen eine Abfolge von Kanälen bilden, die Rippen (A) umfassen, die zwischen den beiden parallelen Ebenen eingesetzt sind, wobei jede der Rippen aus mindestens einem aus einer der Platten ausgeschnittenen Streifen (B) besteht, wobei die Breite des Streifens im Bereich zwischen 1 und 15 mm liegt, wobei der Streifen mit der Platte über mindestens eine Seite (E1; E2) fest verbunden bleibt und der Streifen derart verformt wird, dass er eine Öffnung erzeugt, die eine Unterbrechung auf der Oberfläche der Platte bildet, und wobei die Richtung (D) der Kanäle einer Platte einen Winkel ungleich null in Bezug auf die Richtung (D') der Kanäle einer benachbarten Platte bildet, und wobei die Rippen eines Kanals Längen aufweisen, die von denen der Rippen eines benachbarten Kanals verschieden sind.

2. Packung nach Anspruch 1, wobei die Rippen eines Kanals eine Länge im Bereich zwischen 1 und 15 mm aufweisen und die Rippen eines benachbarten Kanals eine größere Länge im Bereich zwischen 2 und 50 mm aufweisen.

3. Packung nach einem der vorhergehenden Ansprüche, wobei die Rippen des gleichen Kanals die gleiche Länge aufweisen.

4. Kontaktkolonne für Flüssigkeit, die mehrere Blöcke umfasst, die strukturierte Packungen nach einem der vorhergehenden Ansprüche umfassen, wobei die Richtung der Kanäle der Packungen gemäß einem Winkel im Bereich zwischen 10° und 75° in Bezug auf die Achse der Kolonne ausgerichtet ist und wobei die Mittelebenen der strukturierten Packung eines der Blöcke einen Winkel im Bereich zwischen 20° und 90° in Bezug auf die Mittelebenen der benachbarten Blöcke bilden.

5. Anwendung einer Kontaktkolonne nach Anspruch 4 zum Trocknen von Gas, zur Erdgasentsäuerung, zur Dekarbonisierung von Rauchgasen, zur Behandlung von Abgas aus einem Claus-Prozess oder zur Destillation.

## Claims

1. A structured packing of a fluid exchange column defining an exchange surface for at least one liquid phase intended to come into intimate contact with at least one gas phase, said packing consisting of a pile of rectangular plates comprising corrugations, each plate being inscribed between two parallel planes (L1 L2), said corrugations forming a succession of channels comprising fins (A) inscribed between said two parallel planes, each one of said fins consisting of at least one band (B) cut out in one of said plates, the width of the band ranging between 1 and 15 mm, the band remaining secured to the plate on at least one side (E1 ; E2) and the band being deformed so as to create an orifice forming a discontinuity on the surface of the plate, wherein direction (D) of the channels of a plate forms a non-zero angle with respect to direction (D') of the channels of an adjacent plate, and wherein the lengths of the fins of one channel are different from the lengths of the fins of a neighbouring channel.

2. A packing as claimed in claim 1, wherein the length of the fins of a channel ranges between 1 and 15 mm, and the length of the fins of a neighbouring channel is greater, ranging between 2 and 50 mm.

3. A packing as claimed in any one of the previous claims, wherein the fins of one channel all have the same length.

4. A fluid contacting column comprising several blocks with structured packings as claimed in any one of the previous claims, wherein said direction of the packing channels is oriented at an angle ranging between 10° and 75° with respect to the axis of the column and wherein the median planes of the structured packing of one of said blocks form an angle ranging between 20° and 90° with respect to the median planes of the adjacent blocks.

5. Application of a contacting column as claimed in claim 4 for gas drying, natural gas deacidizing, fumes decarbonation, Claus tail gas treatment or distillation.
